# EUROPÄISCHE PATENTSCHRIFT

(11) **EP 3 767 580 B1**
(45) Veröffentlichungstag und Bekanntmachung des Hinweises auf die Patenterteilung: **01.10.2025**
(21) Anmeldenummer: 20183463.7
(22) Anmeldetag: 01.07.2020
(51) Int. Cl.: G06T 5/00, G06T 7/00

(54) **STEUEREINHEIT UND VERFAHREN ZUR AUSWERTUNG VON BILDDATEN IN EINEM HAUSGERÄT**
CONTROL UNIT AND METHOD FOR EVALUATING IMAGE DATA IN A DOMESTIC APPLIANCE
UNITÉ DE COMMANDE ET PROCÉDÉ D'ÉVALUATION DES DONNÉES D'IMAGE DANS UN APPAREIL ÉLECTROMÉNAGER

(30) Priorität: 15.07.2019 DE 102019210426
(43) Veröffentlichungstag der Anmeldung: 20.01.2021
(73) Patentinhaber: BSH Hausgeräte GmbH, 81739 München (DE)
(72) Erfinder: Söllner, Christoph, 81475 München (DE); Buck, Thorbjörn, 82229 Türkenfeld (DE)

(56) Entgegenhaltungen:
- EP-A2- 2 444 733
- CN-A- 107 577 352
- WONWOO LEE ET AL: "Real-time Color Correction for Marker-based Augmented Reality Applications", INTERNET CITATION, 1 January 2009 (2009-01-01), pages 32 - 35, XP002783362, ISBN: 978-0-9806098-0-6, Retrieved from the Internet <URL:https://pdfs.semanticscholar.org/9bf9/92181190c65e5cb9fc523512f8e2b3faa766.pdf> [retrieved on 20180725]

## Beschreibung

Die Erfindung betrifft ein Hausgerät. Insbesondere betrifft die Erfindung ein Verfahren und eine entsprechende Steuereinheit zur Auswertung von Bilddaten in Bezug auf ein Objekt in einem Hausgerät.

Ein Hausgerät, insbesondere ein Ofen, kann eine Kamera umfassen, die eingerichtet ist, Bilddaten in Bezug auf ein Objekt, insbesondere ein Nahrungsmittel, in dem Innenraum des Hausgeräts zu erfassen. Die Bilddaten können ausgewertet werden, z.B. um ein Objekt im Innenraum des Hausgeräts zu identifizieren oder um den Garzustand eines Nahrungsmittels im Innenraum des Hausgeräts zu ermitteln. Die Güte der Bilddaten hängt dabei typischerweise von der jeweiligen Beleuchtungssituation und weiteren Parametern, wie etwa dem Verschmutzungsgrad, im Innenraum des Hausgeräts ab.

EP 2 444 733 A2 beschreibt ein Verfahren zur Korrektur eines Bildes eines in einem Kochgerät angeordneten Nahrungsmittels. WONWOO LEE ET AL: "Real-time Color Correction for Marker-based Augmented Reality Applications", 1. Januar 2009, Seiten 32-35, ISBN 978-0-9806098-0-6 beschreibt ein Verfahren zur Farbkorrektur von Markern für Augmented-Reality-Anwendungen. CN 107 577 352 A beschreibt ein Verfahren zur Auswertung einer Markierung an einem Hausgerät.

Das vorliegende Dokument befasst sich mit der technischen Aufgabe, die Güte der Auswertung von Bilddaten in Bezug auf ein Objekt im Innenraum eines Hausgeräts zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Steuereinheit für ein Hausgerät gemäss Anspruch 1 beschrieben. Das Hausgerät umfasst einen Innenraum zur Aufnahme zumindest eines Objektes (insbesondere zur Aufnahme eines Nahrungsmittels oder eines Wäschestücks oder von Geschirr), das in dem Hausgerät be- oder verarbeitet wird. Das Hausgerät kann ein Ofen, ein Kühl- oder Gefriergerät, eine Spülmaschine, eine Waschmaschine, ein Trockner, ein Küchengerät, etc. sein. Der Innenraum kann z.B. ein Garraum, ein Spülraum, ein Kühlraum, ein Waschraum oder ein Trockenraum sein.

Der Innenraum kann durch eine Leuchteinheit (insbesondere durch eine Lampe) zumindest teilweise beleuchtet sein. Dabei kann die Beleuchtungssituation im Innenraum des Hausgeräts davon abhängen, ob sich Objekte im Innenraum befinden (durch die z.B. ein Schatten geworfen wird), und/oder ob der Innenraum verschmutzt ist (und ggf. die Leuchteinheit zumindest teilweise bedeckt ist). Ferner kann die Beleuchtungssituation durch Licht beeinflusst sein, das von außen in den Innenraum scheint. Die Beleuchtungssituation im Innenraum des Hausgeräts kann somit variieren.

In dem Innenraum des Hausgeräts kann zumindest eine Referenz-Marke angeordnet sein, wobei die Referenz-Marke Referenzwerte für ein oder mehrere unterschiedliche Eigenschaften aufweist. Die Referenz-Marke kann ein oder mehrere unterschiedliche Teilbereiche mit zumindest teilweise unterschiedlichen Referenzwerten für die ein oder mehreren Eigenschaften umfassen. Alternativ oder ergänzend kann die Referenz-Marke einen maschinen-lesbaren Code, insbesondere einen Quick Response Code und/oder ein Logo umfassen. Die Referenz-Marke kann an einer Wand des Innenbereichs oder an einem Objekt im Innenbereich angeordnet sein.

Eine Referenz-Marke kann ausgebildet sein, Information in Bezug auf die ein oder mehreren Eigenschaften der Referenz-Marke, insbesondere in Bezug auf die Referenzwerte der ein oder mehreren Eigenschaften, (optisch) anzuzeigen. Beispielsweise kann die Information in Bezug auf die Referenzwerte in die Referenz-Marke eincodiert sein (z.B. in Form eines maschinen-lesbaren Codes). Insbesondere kann die Referenz-Marke einen Code aufweisen, der Information in Bezug auf die Referenzwerte für die ein oder mehreren unterschiedlichen Eigenschaften der Referenz-Marke 200) umfasst. Alternativ oder ergänzend kann die Referenz-Marke ausgebildet sein, über die Codierung der Referenz-Marke auf eine Datenquelle zu verweisen, in der die Referenzwerte der ein oder mehreren Eigenschaften (z.B. spezifisch für einen bestimmten Typ von Hausgerät) hinterlegt sind. Beispielsweise kann auf einen bestimmten Appbereich oder auf ein URL (Uniform Resource Locator) verwiesen werden.

Gemäss der Erfindung bezieht sich zumindest eine Eigenschaft einer Mehrzahl von im Innenraum angeordneten Referenz-Marken auf eine Farbe. Die Steuereinheit ist dafür eingerichtet, die Bilddaten zu bearbeiten, um die Bilddaten zumindest teilweise farblich zu normalisieren. Beispielsweise können die ein oder mehreren (optischen bzw. optisch relevanten) Eigenschaften einer Referenz-Marke umfassen: den Farbwert und/oder die Farbtemperatur zumindest eines Teilbereichs der Referenz-Marke; den Farbwert und/oder die Farbtemperatur einer Weißfläche der Referenz-Marke; den Kontrast zwischen zwei oder mehr Teilbereichen der Referenz-Marke, und/oder die Helligkeit zumindest eines Teilbereichs der Referenz-Marke.

Die Steuereinheit ist eingerichtet, mittels einer Kamera (z.B. einer Kamera des Hausgeräts) Bilddaten in Bezug auf den Innenraum des Hausgeräts zu erfassen. Dabei kann die Kamera derart angeordnet sein, und/oder der Erfassungsbereich der Kamera kann derart sein, dass die ein oder mehreren Referenz-Marken und/oder ein oder mehrere Objekte im Innenraum des Hausgeräts durch die Kamera erfasst werden können. Die Bilddaten können ein einzelnes Bild und/oder eine zeitliche Sequenz von Bilden umfassen. Die Bilddaten können ein Bild des Innenraums darstellen bzw. repräsentieren. Das Bild kann N x M Pixel aufweisen, wobei N und M typischerweise jeweils 500 oder mehr, oder 1000 oder mehr sind.

Des Weiteren ist die Steuereinheit eingerichtet, die Referenz-Marken in den Bilddaten zu identifizieren, und auf Basis der Bilddaten Istwerte für die ein oder mehreren Eigenschaften der einzelnen Referenz-Marken zu ermitteln. Insbesondere kann das durch die Bilddaten dargestellte Bild in Bezug auf den Innenraum anhand von ein oder mehreren Bildverarbeitungsmethoden ausgewertet werden, um die Istwerte für die ein oder mehreren Eigenschaften der Referenz-Marke zu ermitteln.

Die Steuereinheit ist ferner eingerichtet, die Bilddaten in Abhängigkeit von den Istwerten und in Abhängigkeit von den Referenzwerten zu bearbeiten. Insbesondere kann die Steuereinheit eingerichtet sein, die Istwerte mit den Referenzwerten für die ein oder mehreren Eigenschaften der Referenz-Marken zu vergleichen. Im Rahmen der Bearbeitung der Bilddaten kann dann, insbesondere auf Basis des Vergleichs der Istwerte mit den Referenzwerten, Objekt-Information in Bezug auf ein Objekt im Innenraum des Hausgeräts ermittelt werden und/oder es kann ein (im Vergleich zu dem durch die Bilddaten dargestellten Bild) aufgewertetes Bild in Bezug auf den Innenraum des Hausgeräts bereitgestellt werden.

Durch die Auswertung der Bilddaten in Bezug auf ein oder mehrere Referenz-Marken, die bekannte Referenzwerte für ein oder mehreren Eigenschaften aufweisen, kann eine zuverlässige und präzise Auswertung der Bilddaten in Bezug auf den Innenraum eines Hausgeräts erfolgen. Insbesondere wird es ermöglicht, die Auswirkungen einer spezifischen Beleuchtungssituation im Innenraum des Hausgeräts zumindest teilweise zu kompensieren und/oder die erfassten Bilddaten zumindest teilweise zu normalisieren. Des Weiteren kann das optische System im Innenraum eines Hausgeräts auf die Umgebungsbedingungen kalibriert werden. Dieser Vorgang der Kalibrierung kann automatisiert in regelmäßigen Abständen und/oder auf Nutzeranforderung manuell ausgelöst werden.

Das Hausgerät kann eingerichtet sein, in dem Innenraum ein Nahrungsmittel zu garen (z.B. zu braten oder durch kochen). Das Hausgerät kann insbesondere ein Ofen sein. Die Steuereinheit kann dann eingerichtet sein, als Objekt-Information Information in Bezug auf den Garzustand eines in dem Innenraum angeordneten Nahrungsmittels zu ermitteln. Beispielsweise kann der Bräunungsgrad eines Bratens in einem Ofen ermittelt werden. Durch die Ermittlung und die Auswertung von Istwerten für ein oder mehrere (optische bzw. optisch relevante) Eigenschaften zumindest einer Referenz-Marke kann die Objekt-Information in Bezug auf den Garzustand eines Nahrungsmittels in besonders präziser und robuster Weise ermittelt werden. Bei der zutreffenden Ermittlung eines Bräunungsgrads eines Objekts im Innenraum des Hausgeräts ist eine akkurate Wiedergabe der Farbe des Objekts in den Bilddaten hilfreich. Die Wiedergabe der Farbe kann aber abhängig sein von einer Beleuchtungssituation, einer Verschmutzung der Kamera oder eines sich zwischen der Kamera und dem Objekt befindlichen Materials. Beispielsweise kann die hier beschriebene Steuereinheit für ein Hausgerät als ein mobiles Endgerät (z.B. ein Smartphone oder Tablet PC) mit Kamera ausgestaltet sein. Wenn das mobile Endgerät vor einem Ofen derartig aufgehängt wird, dass die Kamera auf das Objekt im Ofen gerichtet ist, so befindet sich zwischen Kamera und Objekt die Frontscheibe, die zumeist getönt ist und die Farbwiedergabe verfälscht. Damit der Bräunungsgrad des Objekts trotzdem korrekt ermittelt werden kann, ist es vorteilhaft, wenn die Bilddaten in Abhängigkeit von den Istwerten und in Abhängigkeit von den Referenzwerten bearbeitet werden, um die Farbverfälschung herauszurechnen und so die Bilddaten zumindest teilweise farblich zu normalisieren.

Die Steuereinheit kann eingerichtet sein, auf Basis der Istwerte und auf Basis der Referenzwerte eine Transformation zu ermitteln. Des Weiteren kann die Steuereinheit eingerichtet sein, das durch die Bilddaten dargestellte Bild in Bezug auf den Innenraum des Hausgeräts mittels der Transformation zu transformieren, um ein transformiertes Bild zu ermitteln. Die Transformation kann für jedes Hausgerät je nach Aufstellungsort und/oder anderer Produktionsparameter wie etwa Kameraeigenschaften unterschiedlich ausfallen. Die Objekt-Information und/oder das aufgewertete Bild können dann in besonders präziser und wiederholbarer Weise auf Basis des transformierten Bildes ermittelt werden.

Die Steuereinheit kann eingerichtet sein, die Transformation derart zu ermitteln, dass der Wert eines Abstandsmaßes (z.B. der mittleren quadratischen Abweichung) zwischen den Istwerten und den Referenzwerten für die ein oder mehreren Eigenschaften der Referenz-Marke für das transformierte Bild kleiner ist als für das durch die Bilddaten dargestellte Bild. Zu diesem Zweck kann z.B. iterativ die Transformation angepasst werden, um iterativ den Wert des Abstandsmaßes zu reduzieren. Das Optimierungsverfahren zur Ermittlung der Transformation kann iterativ wiederholt werden, bis ein (lokales) Minimum des Wertes des Abstandsmaßes erreicht ist und/oder bis ein anderweitiges Abbruchkriterium erreicht wird. Durch eine derart ermittelte Transformation kann die Güte der bereitgestellten Objekt-Information und/oder des aufgewerteten Bildes weiter erhöht werden.

Die Steuereinheit kann eingerichtet sein, die Position der Referenz-Marke in dem Innenraum des Hausgeräts zu ermitteln. Die Position der Referenz-Marke kann auf Basis der Bilddaten ermittelt werden. Alternativ oder ergänzend kann auf Basis der Istwerte für die ein oder mehreren Eigenschaften der Typ der Referenz-Marke ermittelt werden. Aus dem Typ der Referenz-Marke kann dann ggf. durch eine vordefinierte Liste die (vorgeschriebene) Position für den ermittelten Typ der Referenz-Marke ermittelt werden.

Die Bilddaten können dann auch in Abhängigkeit von der Position der Referenz-Marke bearbeitet werden. Insbesondere kann die Transformation zur Transformation des durch die Bilddaten dargestellten Bildes in Abhängigkeit von der Position der Referenz-Marke ermittelt werden. Durch die Berücksichtigung der Position der Referenz-Marke, und somit durch Berücksichtigung der Position der durch die Referenz-Marke angezeigten Beleuchtungssituation im Innenraum des Hausgeräts, kann die Güte der Bearbeitung der Bilddaten weiter erhöht werden.

Die Steuereinheit kann eingerichtet sein, auf Basis der in den Bilddaten identifizierten Referenz-Marke, insbesondere auf Basis der Istwerte für die ein oder mehreren Eigenschaften der Referenz-Marke, und auf Basis von Zuordnungsinformation einen Hausgeräte-Typ des Hausgeräts aus einer Mehrzahl von Hausgeräte-Typen zu ermitteln bzw. auszuwählen. Die (im Vorfeld festgelegte) Zuordnungsinformation kann ausgebildet sein, unterschiedliche Kombinationen von ein oder mehreren Referenz-Marken unterschiedlichen Hausgeräte-Typen aus der Mehrzahl von Hausgeräte-Typen zuzuordnen.

Beispielhafte Hausgeräte-Typen sind: ein oder mehrere unterschiedliche Modelle eines Ofens; ein oder mehrere unterschiedliche Modelle eines Kühl- oder Gefriergeräts; ein oder mehrere unterschiedliche Modelle einer Spülmaschine; ein oder mehrere unterschiedliche Modelle einer Waschmaschine; ein oder mehrere unterschiedliche Modelle einer Küchenmaschine; und/oder ein oder mehrere unterschiedliche Modelle eines Trockners.

Die Bilddaten können dann auch in Abhängigkeit von dem ermittelten Hausgeräte-Typ des Hausgeräts bearbeitet werden. Insbesondere kann die Transformation zur Transformation des durch die Bilddaten dargestellten Bildes in Abhängigkeit von dem Hausgeräte-Typ ermittelt werden. Durch den Hausgeräte-Typ können z.B. optisch relevante Eigenschaften des Innenraums des Hausgeräts angezeigt werden (wie z.B. Reflexionseigenschaften und/oder die Farbe der Wände des Innenraums, die Anordnung einer Leuchteinheit zur Beleuchtung des Innenraums, etc.). Die Berücksichtigung dieser Information ermöglicht es, die Güte der Bearbeitung der Bilddaten weiter zu erhöhen.

Gemäss der Erfindung weist der Innenraum des Hausgeräts eine Mehrzahl von unterschiedlichen Referenz-Marken mit jeweiligen Referenzwerten für die ein oder mehreren Eigenschaften auf. Die unterschiedlichen Referenz-Marken sind an unterschiedlichen Positionen im Innenraum des Hausgeräts angeordnet. Die Referenz-Marken der Mehrzahl von Referenz-Marken können zumindest teilweise unterschiedliche Referenzwerte für die ein oder mehreren Eigenschaften aufweisen. Alternativ oder ergänzend können die Referenz-Marken der Mehrzahl von Referenz-Marken zumindest teilweise unterschiedlich ausgerichtet und/oder orientiert sein. Durch die Verwendung von unterschiedlichen Referenz-Marken in einem Hausgerät kann die Güte der Bearbeitung der Bilddaten weiter erhöht werden. Die Befestigung der Referenz-Marken kann so gestaltet sein, dass die Referenz-Marken von einem Nutzer des Hausgeräts für bestimmte Zwecke (z.B. Pyrolysefunktion, Reinigung) entfernt, an eine andere Position innerhalb des Garraumes bzw. Innenraums angebracht, und/oder ausgetauscht werden können.

Gemäss der Erfindung ist die Steuereinheit eingerichtet, auf Basis der Bilddaten Istwerte für die ein oder mehreren Eigenschaften der einzelnen Referenz-Marken der Mehrzahl von Referenz-Marken zu ermitteln. Des Weiteren ist die Steuereinheit eingerichtet, die Bilddaten in Abhängigkeit von den Istwerten und den Referenzwerten der Mehrzahl von Referenz-Marken zu bearbeiten. Die Transformation zur Transformation des durch die Bilddaten dargestellten Bildes wird in Abhängigkeit von den Istwerten und den Referenzwerten der Mehrzahl von Referenz-Marken ermittelt. Zu diesem Zweck ist die Steuereinheit eingerichtet, auf Basis der Istwerte und auf Basis der Referenzwerte für die Mehrzahl von Referenz-Marken an der entsprechenden Mehrzahl von Positionen eine Mehrzahl von lokalen Transformationen für die entsprechende Mehrzahl von Positionen zu ermitteln (z.B. so dass jeweils der Wert des Abstandsmaßes reduziert wird). Des Weiteren ist die Steuereinheit eingerichtet, auf Basis der Mehrzahl von lokalen Transformationen durch Interpolation zwischen den lokalen Transformationen für die unterschiedlichen Positionen, die Transformation für das durch die Bilddaten dargestellte Bild zu ermitteln.

Die unterschiedlich positionierten Referenz-Marken im Innenraum des Hausgeräts können somit als unterschiedliche Stützstellen zur Ermittlung einer Transformation für die Bilddaten genutzt werden. Durch die Berücksichtigung von unterschiedlich positionierten Stützstellen kann die Güte der Bearbeitung der Bilddaten weiter erhöht werden.

Gemäß einem weiteren Aspekt der Erfindung wird ein Hausgerät gemäss Anspruch 9 beschrieben, das einen Innenraum mit mehreren unterschiedlichen, in dem Innenraum angeordneten Referenz-Marken umfasst. Des Weiteren umfasst das Hausgerät zumindest eine Kamera, die eingerichtet ist, Bilddaten in Bezug auf den Innenraum zu erfassen. Außerdem umfasst das Hausgerät die in diesem Dokument beschriebene Steuereinheit, die ausgebildet ist, die Bilddaten zu bearbeiten, um Objekt-Information in Bezug auf ein Objekt im Innenraum des Hausgeräts zu ermitteln und/oder um ein aufgewertetes Bild in Bezug auf den Innenraum des Hausgeräts bereitzustellen.

Das Hausgerät kann eine Benutzerschnittstelle umfassen (z.B. mit einem Bildschirm). Die Steuereinheit kann eingerichtet sein, die Objekt-Information und/oder das aufgewertete Bild über die Benutzerschnittstelle auszugeben. So kann der Komfort für einen Nutzer des Hausgeräts erhöht werden.

Gemäß einem weiteren Aspekt wird ein Verfahren zur Verarbeitung von Bilddaten in Bezug auf ein Hausgerät gemäss Anspruch 12 beschrieben. Das Hausgerät weist in einem Innenraum mehrere unterschiedliche Referenz-Marken auf. Eine Referenz-Marke kann an einer Wand des Innenraums oder an einem Objekt im Innenraum befestigt sein. Die Referenz-Marken weisen jeweils Referenzwerte für ein oder mehrere Eigenschaften auf.

Es ist zu beachten, dass jegliche Aspekte der in diesem Dokument beschriebenen Steuereinheit, des in diesem Dokument beschriebenen Hausgeräts und/oder des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1a den Innenraum eines Ofens als Beispiel für ein Hausgerät;
Figur 1b beispielhafte Komponenten eines Hausgeräts;
Figur 2 eine beispielhafte Referenz-Marke;
Figur 3a den Innenraum eines Ofens mit mehreren unterschiedlichen Referenz-Marken;
Figur 3b eine beispielhafte Beleuchtungssituation im Innenraum eines Ofens;
Figur 3c ein beispielhaftes transformiertes Bild des Innenraums des Ofens; und
Figur 4 ein Ablaufdiagramm eines beispielhaften Verfahrens zur Bearbeitung von Bilddaten in Bezug auf ein Objekt im Innenraum eines Hausgeräts.

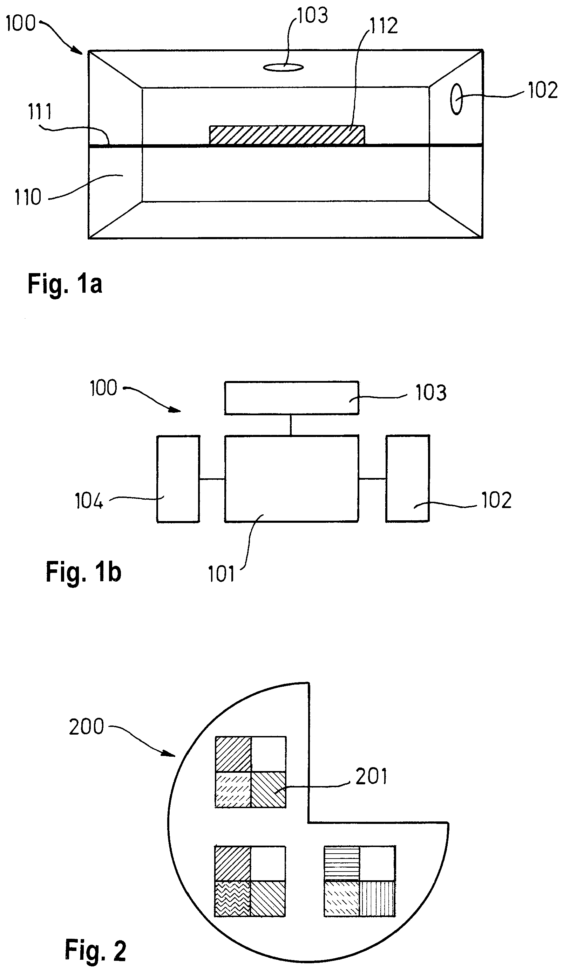

Wie eingangs dargelegt, befasst sich das vorliegende Dokument mit der zuverlässigen und präzisen Auswertung von Bilddaten, die im Innenraum eines Hausgeräts erfasst wurden. In diesem Zusammenhang zeigt Fig. 1a den Innenraum 110 eines Ofens 100 als Beispiel für ein Hausgerät. Weitere Beispiele für Hausgeräte mit jeweils einem Innenraum sind: ein Kühlschrank, eine Gefriertruhe, ein Gefrierschrank, eine Waschmaschine, ein Trockner, eine Spülmaschine, eine Küchenmaschine, etc.

In den Innenraum 110 des Ofens 100 kann ein Nahrungsmittel 112 (als Beispiel für ein Objekt) auf ein Rost 111 gelegt und im Innenraum 110 des Ofens 100 gegart werden. Der Innenraum 110 kann dabei durch eine Leuchteinheit 102 beleuchtet werden, um es einem Nutzer des Ofens 100 zu ermöglichen, in komfortabler Weise den Fortschritt des Garprozesses des Nahrungsmittels 112 zu überwachen.

Des Weiteren kann der Ofen 100 zumindest eine Kamera 103 umfassen, die eingerichtet ist, Bilddaten in Bezug auf den Innenraum 110, insbesondere in Bezug auf das Nahrungsmittel 112 im Innenraum 110, zu erfassen. Ferner umfasst der Ofen 100, wie in Fig. 1b dargestellt, eine Steuer- bzw. Recheneinheit 101, die eingerichtet ist, die von der Kamera 103 erfassten Bilddaten auszuwerten. Beispielsweise kann die Steuereinheit 101 eingerichtet sein, auf Basis der Bilddaten automatisch den Garzustand des Nahrungsmittels 112 zu ermitteln. Des Weiteren kann die Steuereinheit 101 eingerichtet sein, Information in Bezug auf die ausgewerteten Bilddaten, z.B. den ermittelten Garzustand des Nahrungsmittels 112, über eine Benutzerschnittstelle 104 des Ofens 100 auszugeben.

Um beispielsweise im Inneren eines Ofens 100 ein Bild von einem Gargut 112 aufzunehmen, etwa für die Identifikation eines Lebensmittels, für die Feststellung von Eigenschaften eines Lebensmittels (z.B. den Gargrad, den Bräunungsgrad, etc.) kann somit eine Kamera 103 in dem Ofen 100 verwendet werden. Dabei kann die Kamera 103 an der oberen Garraumbegrenzung, an ein oder mehreren Ecken des Innenraums 110 und/oder an der Tür zum Innenraum 110 angeordnet sein.

Die durch die ein oder mehreren Leuchteinheiten 102 bereitgestellte Beleuchtungssituation im Innenraum 110 eines Hausgeräts 100 weist typischerweise eine inhomogene Ausleuchtung von unterschiedlichen Teilbereichen des Innenraums 110 auf. Die inhomogene Ausleuchtung kann inhärent durch die Anordnung der ein oder mehreren Leuchteinheiten 102 verursacht werden. Des Weiteren kann durch ein Objekt 112, das im Innenraum 110 angeordnet ist, eine Verdeckung von ein oder mehreren Teilbereichen des Innenraums 110 verursacht werden, so dass sich die ein oder mehreren Teilbereiche ggf. in einem Lichtschatten des Objektes 112 befinden. Ferner kann es, insbesondere bei einem Ofen 100, zu einer signifikanten Verschmutzung der den Innenraum 110 begrenzenden Wände kommen. Die Verschmutzung kann z.B. dazu führen, dass eine Leuchteinheit 102 zumindest teilweise durch Schmutz verdeckt wird, so dass sich die Ausleuchtung des Innenraums 110 verschlechtert. Außerdem können sich durch die Verschmutzung des Innenraums 110 die Reflexionseigenschaften der Wände des Innenraums 110 verändern. Ferner kann das Objektiv der Kamera 103 verschmutzt sein.

Die von einer Kamera 103 erfassten Bilddaten in Bezug auf den Innenraum 110 eines Hausgeräts 100 sind typischerweise von der konkreten Ausleuchtung des Innenraums 110 abhängig. Insbesondere kann es bei einer relativ schlechten und/oder inhomogenen Ausleuchtung zu Farbverzerrungen, Bildrauschen, etc. kommen. Durch die Beeinträchtigung der Bilddaten wird typischerweise auch die Güte der Auswertung der Bilddaten und/oder die Qualität der bereitgestellten Bilder, die z.B. über ein soziales Netzwerk geteilt werden können, beeinträchtigt.

In diesem Dokument wird ein Verfahren beschrieben, das es ermöglicht, eine Transformationsvorschrift bzw. kurz eine Transformation für die von einer Kamera 103 erfassten Bilddaten zu ermitteln. Die Transformationsvorschrift kann dabei auf Basis von Korrekturbasiswerten an definierten Stützstellen an der Innenwand des Innenraums 110 und/oder an einem Objekt 112 im Innenraum 110 eines Hausgeräts 100 ermittelt werden. Die Transformationsvorschrift kann auf die Bilddaten angewendet werden, um die Güte der Bilddaten bzw. der von den Bilddaten dargestellten Bilder zu erhöhen und/oder um die Güte der Auswertung der Bilddaten zu erhöhen.

Fig. 2 zeigt ein beispielhafte Referenz-Marke 200, die z.B. an zumindest einer Wand des Innenraums 110 eines Hausgeräts 100 angeordnet werden kann. Die Referenz-Marke 200 kann ein oder mehrere Teilbereiche 201 mit jeweils ein oder mehreren Referenzwerten für ein oder mehrere Eigenschaften umfassen. Die ein oder mehreren Teilbereiche 201 können in definierter Weise zueinander angeordnet sein. Beispielhafte Eigenschaften eines Teilbereichs 201 sind:
- die Größe der Fläche des Teilbereichs 201;
- die Farbe des Teilbereichs 201;
- die Form des Teilbereichs 201; und/oder
- ein Reflexionsgrad des Teilbereichs 201.

Die Referenzwerte der ein oder mehreren Eigenschaften der ein oder mehreren Teilbereiche 201 einer Referenz-Marke 200 können für die Steuereinheit 101 eines Hausgeräts 100 als Referenzinformation bekannt sein. Des Weiteren kann für die Steuereinheit 101 die genaue Anordnung und/oder Orientierung bzw. Ausrichtung und/oder die Position der Referenz-Marke 200 innerhalb des Innenraums 110 des Hausgeräts 100 und/oder an einem Objekt 112 im Innenraum 110 des Hausgeräts 110 als Referenzinformation bekannt sein.

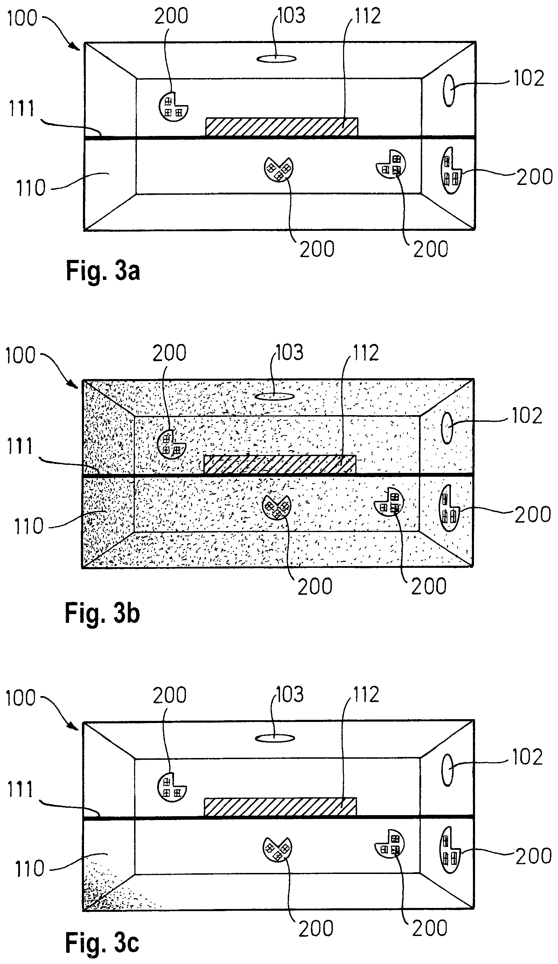

Fig. 3a zeigt den Innenraum 110 des Ofens 100 aus Fig. 1a mit mehreren Referenz-Marken 200, die an unterschiedlichen Stellen bzw. Positionen des Innenraums 110 angeordnet sind. Die Referenz-Marken 200 können jeweils unterschiedlich angeordnet bzw. orientiert sein. Des Weiteren können die Referenz-Marken 220 ggf. teilweise unterschiedlich sein.

Die Steuereinheit 101 kann eingerichtet sein, die Kamera 103 zu veranlassen, Bilddaten in Bezug auf die ein oder mehreren Referenz-Marken 200 zu erfassen. Des Weiteren kann die Steuereinheit 101 eingerichtet sein, auf Basis der Bilddaten und auf Basis der Referenzinformation in Bezug auf die ein oder mehreren Referenz-Marken 200 eine Transformation zu ermitteln, die zur Verarbeitung von Bilddaten in Bezug auf ein Objekt 112 im Innenraum 110 des Ofens 100 verwendet werden kann. Insbesondere kann die Steuereinheit 101 eingerichtet sein, die durch die Kamera 103 erfassten Bilddaten in Bezug auf ein Objekt 112 im Innenraum 110 des Ofens 100 mit der Transformation zu verarbeiten. So können die Güte der durch die Bilddaten dargestellten Bilder des Objekts 112 und/oder die Güte der Auswertung der Bilddaten erhöht werden.

Es wird somit ein Hausgerät 100 mit einem Innenraum 110, mit mindestens einer Beleuchtungsquelle 102, mit mindestens einer Kamera 103, und bevorzugt mit mindestens zwei optischen Referenz-Marken 200 an den Wänden des Innenraums 110 und/oder auf einem Objekt 112 im Innenraum 110 beschrieben. Dabei sind die Referenz-Marken 200 derart angeordnet, dass sich die Referenz-Marken 200 im Erfassungsbereich der Kamera 103 befinden. Die Kamera 103 ist mit einer Rechen- und/oder Steuereinheit 101 im Hausgerät 100 verbunden, welche optional mit einer entfernten Rechnereinheit, z.B. mit einem Backend-Server, über eine geeignete Kommunikationsverbindung in Verbindung stehen kann.

Die mindestens zwei Marken 200 können bereits im Produktionsprozess des Hausgeräts 100 an- oder aufgebracht werden. Alternativ oder ergänzend kann es einem Nutzer ermöglicht werden, die Marken 200 nachträglich anzubringen. Eine Marke 200 kann derart beschaffen sein, dass die Marke 200 bezüglich der Form und/oder dem Muster eineindeutig für das spezifische Hausgerät 200 ausgestaltet ist. Das eindeutige Erscheinungsbild der Marke 200 kann dabei eine eindeutige Zuordnung der Marke 200 zu einer bestimmten Position im Innenraum 110 des Hausgeräts 100 ermöglichen. Mit anderen Worten, die Referenzwerte der ein oder mehreren Eigenschaften einer Marke 200 können ausgebildet sein, es der Steuereinheit 101 zu ermöglichen, eindeutig die Position der Marke 200 im Innenraum 110 des Hausgeräts 100 zu ermitteln.

Eine Marke 200 kann derart gestaltet sein, dass die Marke 200 ein oder mehrere Merkmale beinhaltet, die lokal definierte Werte von Farbe, Kontrast, etc. repräsentieren. Beispielsweise kann eine Marke 200 derart ausgebildet sein, dass aus dem jeweils bekannten Farbauftrag der Marke 200 in ein oder mehreren Teilbereichen 201 eine Verzerrung in ein oder mehreren unterschiedlichen Frequenzbereichen des Lichts an der Position der Marke 200 ermittelt werden kann. Beispielsweise kann die Marke 200 für unterschiedliche Grundfrequenzen der Kamera 103 (z.B. Red, Green, Blue) unterschiedliche Teilbereich 201 aufweisen, um eine Transformation für die unterschiedlichen Grundfrequenzen zu ermitteln.

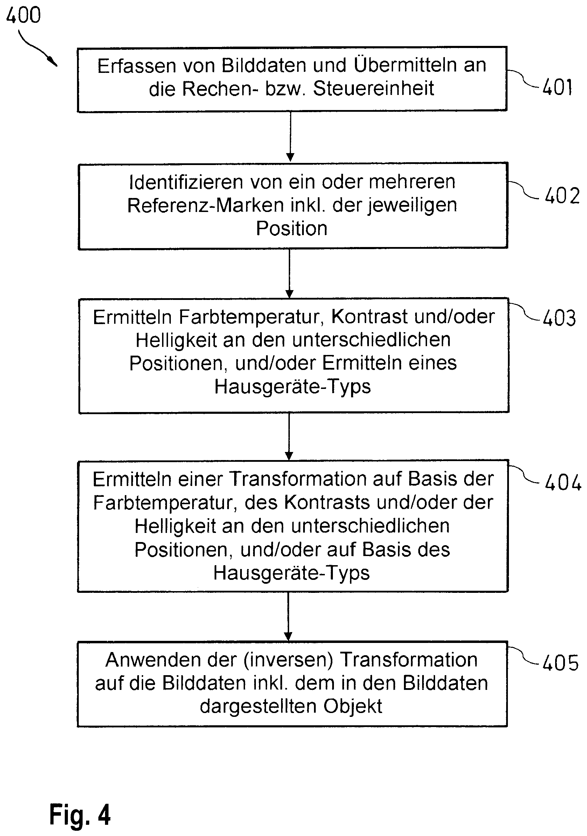

Fig. 4 zeigt ein beispielhaftes Verfahren 400 zur Bearbeitung von Bilddaten in Bezug auf den Innenraum 110 eines Hausgeräts 100. Zur Ermittlung einer Transformation können Bilddaten in Bezug auf den Innenraum 110 des Hausgeräts 100 ermittelt werden (Schritt 401). Die Bilddaten sind dabei von der individuellen Situation im Innenraum 110 abhängig, wie z.B. von der Verschmutzung, von der Verwendung eines nutzerspezifischen Leuchtmittels für die Leuchteinheit 102, von einem aktuellen Lichteinfall von außen in den Innenraum 110, von ein oder mehreren Reflexionen im Innenraum 110, von einem Schattenwurf durch ein oder mehreren Objekt 112, etc.

Des Weiteren können die ein oder mehreren Referenz-Marken 200 in den Bilddaten identifiziert werden (Schritt 402). Ferner können ein oder mehrere Istwerte für ein oder mehreren Eigenschaften (wie z.B. Form, Orientierung, Inhalt, etc.) für jede Referenz-Marke 200 ermittelt werden. Die Istwerte der ein oder mehreren Eigenschaften einer Referenz-Marke 200 können mit der Referenzinformation der Referenz-Marke 200 im Innenraum 110 verglichen werden, und es kann so die Position der Referenz-Marke 200 im Innenraum 110 ermittelt werden (Schritt 402). Des Weiteren können auf Basis eines Vergleichs zwischen Ist-Eigenschaften und Referenz-Eigenschaften Information in Bezug auf die lokalen Bildeigenschaften an der Position der Referenz-Marke 200 ermittelt werden (Schritt 403), wie z.B.
- lokale Farbtemperatur durch Bemessung von Weißflächen der Referenz-Marke 200;
- Fokuseinstellung der Kamera 102 durch Bemessung der Kantenübergänge der Referenz-Marke 200;
- lokale Helligkeit; und/oder
- ein oder mehrere lokale Messwerte zu Referenzfarben.

Außerdem kann anhand einer Bewertung einer optischen Referenz-Marke 200 (wie z.B. Form und/oder Position) und weiterer Merkmale des Innenraums 110 des Hausgeräts 100 ein Hausgeräte-Typ des Hausgeräts 100 ermittelt werden (Schritt 403). Beispielsweise kann ggf. ein bestimmtes Modell eines Hausgeräts 100 ermittelt werden und/oder es kann ermittelt werden, ob es sich um einen Ofen, eine Waschmaschine, eine Spülmaschine, einen Kühlschrank, etc. handelt.

Durch eine Fusion der aus dem Hausgeräte-Typ abgeleiteten relevanten Information (beispielsweise Ort und Art der Beleuchtung, Farbe des Innenraums, etc.) und/oder durch ermittelte optische Kennwerte an den ein oder mehreren Referenz-Marken 200 kann eine geeignete Transformationsvorschrift für ein mit der Kamera 103 erfasstes Bild ermittelt werden (Schritt 404). Dabei kann die Transformationsvorschrift derart ermittelt werden, dass durch die Transformationsvorschrift eine Gesamtbild-Optimierungen parametriert wird (bspw. mittels einer Gammakorrektur o.ä.). Alternativ oder ergänzend können auf Basis der Positionen der ein oder mehreren Referenz-Marken 200 ein oder mehrere Transformationsvorschriften und/oder Transformationspfade ermittelt werden.

Die ermittelte Transformation (bzw. eine Inverse der ermittelten Transformation) kann auf das erfasste Bild in Bezug auf den Innenraum 110 angewendet werden (Schritt 405). Des Weiteren können ggf. ein oder mehrere weitere bekannte Verfahren zur Bildverarbeitung angewendet werden, um die Eigenschaften des bearbeiteten Bildes weiter zu verbessern.

Durch die stützstellenbasierte Ermittlung einer Transformationsvorschrift, wobei eine Stützstelle durch eine Referenz-Marke 200 bereitgestellt wird, wird eine lokale Optimierung eines von einer Kamera 103 erfassten Bildes ermöglicht. Zudem kann sichergestellt werden, dass Bildeigenschaften eines Bildes in Bezug auf ein Gargut 112 auf definierte Referenzen rückgeführt werden. Somit kann bspw. vermieden werden, dass eine Bräunungsdetektion durch einen fehlerhaften Weißabgleich o.ä. verfälscht wird.

Fig. 3b zeigt ein beispielhaftes Bild des Innenraums 110 eines Ofens 100, wie es sich direkt aus den von der Kamera 103 erfassten Bilddaten ergibt. Anhand der Bilddaten für die Referenz-Marken 200 im Innenraum 110 des Ofens 100 kann eine Transformation ermittelt werden, mit der das in Fig. 3b dargestellte Bild transformiert wird. Das sich daraus ergebende transformierte Bild ist beispielhaft in Fig. 3c dargestellt. Aus Fig. 3c ist ersichtlich, dass durch die Transformation die Gleichmäßigkeit und/oder die Homogenität der Beleuchtung innerhalb des transformierten Bildes erhöht werden kann. Das transformierte Bild kann z.B. über eine Benutzerschnittstelle 104 des Ofens 100 ausgegeben werden, um es einem Nutzer des Ofens 100 zu ermöglichen, den Zustand des Garguts 112 im Ofen 100 zu überwachen. Alternativ oder ergänzend kann auf Basis des transformierten Bildes mit erhöhter Genauigkeit automatisch der Garzustand des Garguts 112 ermittelt werden.

Fig. 4 zeigt somit ein Ablaufdiagramm eines beispielhaften Verfahrens 400 zur Verarbeitung von Bilddaten in Bezug auf ein Hausgerät 100, insbesondere in Bezug auf den Innenraum 110 des Hausgeräts 100. Das Hausgerät 100 weist in dem Innenraum 110 zumindest eine Referenz-Marke 200, bevorzugt zumindest zwei Referenz-Marken 200, auf. Dabei weist eine Referenz-Marke 200 Referenzwerte für ein oder mehrere Eigenschaften auf. Das Verfahren 400 kann durch eine Steuereinheit 101 des Hausgeräts 100 ausgeführt werden.

Das Verfahren 400 umfasst das Erfassen 401 von Bilddaten in Bezug auf den Innenraum 110 des Hausgeräts 100 mittels einer Kamera 103 des Hausgeräts 100. Dabei sind die ein oder mehreren Referenz-Marken 200 und/oder die ein oder mehreren Objekte 112, die in dem Innenraum 110 des Hausgeräts 100 verarbeitet werden, typischerweise im Erfassungsbereich der Kamera 103 angeordnet.

Das Verfahren 400 umfasst ferner das Identifizieren 402 der Referenz-Marke 200 in den Bilddaten. Zu diesem Zweck können ein oder mehreren Bildverarbeitungsmethoden verwendet werden, insbesondere Objekterkennungsmethoden.

Außerdem umfasst das Verfahren 400 das Ermitteln 403 von Istwerten für die ein oder mehreren Eigenschaften der Referenz-Marke 200 auf Basis der Bilddaten. Zu diesem Zweck können wiederum ein oder mehrere Bildverarbeitungsmethoden angewendet werden, z.B. um den Farbwert und/oder die Helligkeit eines Teilbereichs 201 der Marke 200 zu ermitteln.

Des Weiteren umfasst das Verfahren 400 das Bearbeiten 404, 405 der Bilddaten in Abhängigkeit von den Istwerten und in Abhängigkeit von den Referenzwerten. Die Bilddaten können insbesondere in Abhängigkeit von einer Differenz bzw. einer Abweichung zwischen den Istwerten und den Referenzwerten bearbeitet werden. Die Bearbeitung der Bilddaten kann erfolgen, um Objekt-Information (z.B. den Garzustand) in Bezug auf ein Objekt 112 (z.B. ein Nahrungsmittel) im Innenraum 110 des Hausgeräts 100 zu ermitteln und/oder um ein aufgewertetes Bild (insbesondere ein Bild mit einer verbesserten Ausleuchtung) in Bezug auf den Innenraum 110 des Hausgeräts 100 bereitzustellen.

Durch die in diesem Dokument beschriebenen Maßnahmen kann bewirkt werden, dass die von einer Kamera 103 eines Hausgeräts 100 bereitgestellte Bildqualität unabhängig von Verschmutzungen an der Beleuchtung, etc. im Innenraum 110 des Hausgeräts 100 ist. Ferner kann eine Korrektur von Variationen in der Beleuchtung, bspw. durch ein Verdecken der Beleuchtung durch ein Gargut 112, Fremdlichteinwirkung von außen, oder auch durch eine Spiegelung an metallischen Oberflächen von Gar- und Kochgeschirr, erfolgen. Des Weiteren wird eine eindeutige Normierung von Farbwerten in einem bestimmten Hausgerät 100 in der jeweils aktuellen Umgebung des Hausgeräts 100, z.B. in der Küche des Nutzers, ermöglicht.

Die vorliegende Erfindung ist nicht auf die gezeigten Ausführungsbeispiele beschränkt. Insbesondere ist zu beachten, dass die Beschreibung und die Figuren nur das Prinzip der beschriebenen Steuereinheit, des beschriebenen Hausgeräts und/oder des beschriebenen Verfahrens veranschaulichen sollen.

## Patentansprüche

1. Steuereinheit (101) für ein Hausgerät (100), das in einem Innenraum (110) eine Mehrzahl von unterschiedlichen Referenz-Marken (200) aufweist; wobei die Referenz-Marken (200) jeweils Referenzwerte für ein oder mehrere unterschiedliche Eigenschaften aufweisen; wobei sich zumindest eine Eigenschaft der Referenz-Marken (200) auf eine Farbe bezieht; wobei die unterschiedlichen Referenz-Marken (200) an unterschiedlichen Positionen im Innenraum (110) des Hausgeräts (100) angeordnet sind; wobei die Steuereinheit (101) eingerichtet ist,
- mittels einer Kamera (103) Bilddaten in Bezug auf den Innenraum (110) des Hausgeräts (100) zu erfassen;
- die Mehrzahl von unterschiedlichen Referenz-Marken (200) in den Bilddaten zu identifizieren;
- auf Basis der Bilddaten Istwerte für die ein oder mehreren Eigenschaften der einzelnen Referenz-Marken (200) der Mehrzahl von Referenz-Marken (200) zu ermitteln;
- auf Basis der Istwerte und auf Basis der Referenzwerte für die Mehrzahl von Referenz-Marken (200) an der entsprechenden Mehrzahl von Positionen eine Mehrzahl von lokalen Transformationen für die entsprechende Mehrzahl von Positionen zu ermitteln;
- auf Basis der Mehrzahl von lokalen Transformationen durch Interpolation zwischen den lokalen Transformationen für die unterschiedlichen Positionen eine Transformation zu ermitteln;
- ein durch die Bilddaten dargestelltes Bild in Bezug auf den Innenraum (110) des Hausgeräts (100) mittels der Transformation zu transformieren, um ein transformiertes Bild zu ermitteln, wobei die Bilddaten bearbeitet werden, um die Bilddaten zumindest teilweise farblich zu normalisieren; und
- Objekt-Information in Bezug auf ein Objekt (112) im Innenraum (110) des Hausgeräts (100) und/oder ein aufgewertetes Bild in Bezug auf den Innenraum (110) des Hausgeräts (100) auf Basis des transformierten Bildes zu ermitteln.

2. Steuereinheit (101) gemäß Anspruch 1, wobei die Steuereinheit (101) eingerichtet ist,
- die Istwerte mit den Referenzwerten für die ein oder mehreren Eigenschaften der Referenz-Marken (200) zu vergleichen; und
- die Bilddaten in Abhängigkeit von Vergleich zu bearbeiten.

3. Steuereinheit (101) gemäß einem der vorhergehenden Ansprüche, wobei die Steuereinheit (101) eingerichtet ist, die Transformation derart zu ermitteln, dass ein Wert eines Abstandsmaßes zwischen den Istwerten und den Referenzwerten für die ein oder mehreren Eigenschaften von zumindest einer Referenz-Marke (200) für das transformierte Bild kleiner ist als für das durch die Bilddaten dargestellte Bild.

4. Steuereinheit (101) gemäß einem der vorhergehenden Ansprüche, wobei die Steuereinheit (101) eingerichtet ist,
- die Positionen der Mehrzahl von Referenz-Marken (200) in dem Innenraum (110) des Hausgeräts (100) zu ermitteln; und
- die Transformation zur Transformation des durch die Bilddaten dargestellten Bildes in Abhängigkeit von den Positionen der Mehrzahl von Referenz-Marken (200) zu ermitteln.

5. Steuereinheit (101) gemäß einem der vorhergehenden Ansprüche, wobei die Steuereinheit (101) eingerichtet ist,
- auf Basis zumindest einer in den Bilddaten identifizierten Referenz-Marke (200), insbesondere auf Basis der Istwerte für die ein oder mehreren Eigenschaften zumindest einer Referenz-Marke (200), und auf Basis von Zuordnungsinformation einen Hausgeräte-Typ des Hausgeräts (100) aus einer Mehrzahl von Hausgeräte-Typen zu ermitteln; wobei die Zuordnungsinformation ausgebildet ist, unterschiedliche Kombinationen von ein oder mehreren Referenz-Marken (200) unterschiedlichen Hausgeräte-Typen aus der Mehrzahl von Hausgeräte-Typen zuzuordnen; und
- die Bilddaten auch in Abhängigkeit von dem Hausgeräte-Typ zu bearbeiten, insbesondere die Transformation zur Transformation des durch die Bilddaten dargestellten Bildes in Abhängigkeit von dem Hausgeräte-Typ zu ermitteln.

6. Steuereinheit (101) gemäß Anspruch 5, wobei die Mehrzahl von Hausgeräte-Typen umfasst,
- ein oder mehrere Modelle eines Ofens;
- ein oder mehrere Modelle eines Kühl- oder Gefriergeräts;
- ein oder mehrere Modelle einer Spülmaschine;
- ein oder mehrere Modelle einer Waschmaschine;
- ein oder mehrere Modelle einer Küchenmaschine; und/oder
- ein oder mehrere Modelle eines Trockners.

7. Steuereinheit (101) gemäß einem der vorhergehenden Ansprüche, wobei die ein oder mehreren Eigenschaften einer Referenz-Marke (200) umfassen,
- einen Farbwert und/oder eine Farbtemperatur zumindest eines Teilbereichs (201) der Referenz-Marke (200);
- einen Farbwert und/oder eine Farbtemperatur einer Weißfläche der Referenz-Marke (200);
- einen Kontrast zwischen zwei oder mehr Teilbereichen (201) der Referenz-Marke (200);
- eine Helligkeit zumindest eines Teilbereichs (201) der Referenz-Marke (200).

8. Steuereinheit (101) gemäß einem der vorhergehenden Ansprüche, wobei
- die Referenz-Marken (200) der Mehrzahl von Referenz-Marken (200) zumindest teilweise unterschiedliche Referenzwerte für die ein oder mehreren Eigenschaften aufweisen; und/oder
- die Referenz-Marken (200) der Mehrzahl von Referenz-Marken (200) zumindest teilweise unterschiedlich ausgerichtet und/oder orientiert sind.

9. Hausgerät (100), das umfasst
- einen Innenraum (110) zur Aufnahme zumindest eines Objektes (112), das in dem Hausgerät (100) be- oder verarbeitet wird;
- eine Mehrzahl von unterschiedlichen, in dem Innenraum (110) angeordneten, Referenz-Marken (200);
- zumindest eine Kamera (112), die eingerichtet ist, Bilddaten in Bezug auf den Innenraum (110) zu erfassen; und
- eine Steuereinheit (101) gemäß einem der vorhergehenden Ansprüche, die ausgebildet ist, die Bilddaten zu bearbeiten, um Objekt-Information in Bezug auf ein Objekt (112) im Innenraum (110) des Hausgeräts (100) zu ermitteln und/oder um ein aufgewertetes Bild in Bezug auf den Innenraum (110) des Hausgeräts (100) bereitzustellen.

10. Hausgerät (100) gemäß Anspruch 9, wobei
- das Hausgerät (100) eingerichtet ist, in dem Innenraum (110) ein Nahrungsmittel zu garen; und
- die Steuereinheit (101) eingerichtet ist, als Objekt-Information Information in Bezug auf einen Garzustand eines in dem Innenraum (110) angeordneten Nahrungsmittels zu ermitteln.

11. Hausgerät (100) gemäß einem der Ansprüche 9 bis 10, wobei
- eine Referenz-Marke (200) einen maschinen-lesbaren Code, insbesondere einen Quick Response Code, umfasst; und/oder
- eine Referenz-Marke (200) ein Logo umfasst; und/oder
- eine Referenz-Marke (200) einen Code aufweist, der Information in Bezug auf die Referenzwerte für die ein oder mehreren unterschiedlichen Eigenschaften der Referenz-Marke 200) umfasst; und/oder
- eine Referenz-Marke (200) ein oder mehrere unterschiedliche Teilbereiche (201) mit unterschiedlichen Referenzwerten für die ein oder mehreren Eigenschaften umfasst.

12. Verfahren (400) zur Verarbeitung von Bilddaten in Bezug auf ein Hausgerät (100); wobei das Hausgerät (100) in einem Innenraum (110) eine Mehrzahl von unterschiedlichen Referenz-Marken (200) aufweist; wobei die Referenz-Marken (200) jeweils Referenzwerte für ein oder mehrere Eigenschaften aufweisen; wobei sich zumindest eine Eigenschaft der Referenz-Marken (200) auf eine Farbe bezieht; wobei die unterschiedlichen Referenz-Marken (200) an unterschiedlichen Positionen im Innenraum (110) des Hausgeräts (100) angeordnet sind; wobei das Verfahren (400) umfasst,
- Erfassen (401) von Bilddaten in Bezug auf den Innenraum (110) des Hausgeräts (100) mittels einer Kamera (103);
- Identifizieren (402) der Mehrzahl von unterschiedlichen Referenz-Marken (200) in den Bilddaten;
- Ermitteln (403) von Istwerten für die ein oder mehreren Eigenschaften der einzelnen Referenz-Marken (200) der Mehrzahl von Referenz-Marken (200) auf Basis der Bilddaten;
- Ermitteln, auf Basis der Istwerte und auf Basis der Referenzwerte für die Mehrzahl von Referenz-Marken (200) an der entsprechenden Mehrzahl von Positionen, einer Mehrzahl von lokalen Transformationen für die entsprechende Mehrzahl von Positionen;
- Ermitteln, auf Basis der Mehrzahl von lokalen Transformationen, einer Transformation durch Interpolation zwischen den lokalen Transformationen für die unterschiedlichen Positionen;
- Transformieren eines durch die Bilddaten dargestellten Bildes in Bezug auf den Innenraum (110) des Hausgeräts (100) mittels der Transformation, um ein transformiertes Bild zu ermitteln, wobei die Bilddaten bearbeitet werden, um die Bilddaten zumindest teilweise farblich zu normalisieren; und
- Ermitteln von Objekt-Information in Bezug auf ein Objekt (112) im Innenraum (110) des Hausgeräts (100) und/oder eines aufgewerteten Bildes in Bezug auf den Innenraum (110) des Hausgeräts (100) auf Basis des transformierten Bildes.

## Claims

1. Control unit (101) for a household appliance (100) which has a plurality of different reference marks (200) in an interior (110); wherein the reference marks (200) in each case have reference values of one or more different properties; wherein at least one property of the reference marks (200) relates to a colour; wherein the different reference marks (200) are arranged at different positions in the interior (110) of the household appliance (100); wherein the control unit (101) is designed
- to record image data relative to the interior (110) of the household appliance (100) by means of a camera (103);
- to identify the plurality of different reference marks (200) in the image data;
- to determine actual values of the one or more properties of the individual reference marks (200) of the plurality of reference marks (200) on the basis of the image data;
- to determine a plurality of local transformations for the corresponding plurality of positions on the basis of the actual values and on the basis of the reference values of the plurality of reference marks (200) at the corresponding plurality of positions;
- to determine a transformation on the basis of the plurality of local transformations, by interpolation between the local transformations for the different positions;
- to transform an image represented by the image data relative to the interior (110) of the household appliance (100) by means of the transformation in order to determine a transformed image, wherein the image data is processed in order to normalize the image data at least partially in terms of colour; and
- to determine, on the basis of the transformed image, object information relative to an object (112) in the interior (110) of the household appliance (100) and/or an evaluated image relative to the interior (110) of the household appliance (100).

2. Control unit (101) according to claim 1, wherein the control unit (101) is designed
- to compare the actual values with the reference values of the one or more properties of the reference marks (200) and
- to process the image data as a function of the comparison.

3. Control unit (101) according to one of the preceding claims, wherein the control unit (101) is designed to determine the transformation such that a value of an interval between the actual values and the reference values of the one or more properties of at least one reference mark (200) is less for the transformed image than for the image represented by the image data.

4. Control unit (101) according to one of the preceding claims, wherein the control unit (101) is designed
- to determine the positions of the plurality of reference marks (200) in the interior (110) of the household appliance (100); and
- to determine the transformation for the transformation of the image represented by the image data as a function of the positions of the plurality of reference marks (200).

5. Control unit (101) according to one of the preceding claims, wherein the control unit (101) is designed
- to determine a household appliance type of the household appliance (100) from a plurality of household appliance types on the basis of at least one reference mark (200) identified in the image data, in particular on the basis of the actual values of the one or more properties of at least one reference mark (200) and on the basis of assignment information; wherein the assignment information is configured to assign different combinations of one or more reference marks (200) to different household appliance types from the plurality of household appliance types; and
- to process the image data, also as a function of the household appliance type, in particular to determine the transformation for the transformation of the image represented by the image data as a function of the household appliance type.

6. Control unit (101) according to claim 5, wherein the plurality of household appliance types comprises
- one or more models of an oven;
- one or more models of a refrigerator or freezer;
- one or more models of a dishwasher;
- one or more models of a washing machine;
- one or more models of a kitchen appliance; and/or
- one or more models of a dryer.

7. Control unit (101) according to one of the preceding claims, wherein the one or more properties of a reference mark (200) comprise
- a colour value and/or a colour temperature of at least one partial region (201) of the reference mark (200);
- a colour value and/or a colour temperature of a white area of the reference mark (200);
- a contrast between two or more partial regions (201) of the reference mark (200);
- a brightness of at least one partial region (201) of the reference mark (200).

8. Control unit (101) according to one of the preceding claims, wherein
- the reference marks (200) of the plurality of reference marks (200) have at least partially different reference values of the one or more properties; and/or
- the reference marks (200) of the plurality of reference marks (200) are at least partially differently aligned and/or oriented.

9. Household appliance (100) which comprises
- an interior (110) for receiving at least one object (112) which is treated or processed in the household appliance (100);
- a plurality of different reference marks (200) arranged in the interior (110).
- at least one camera (112) which is designed to record image data relative to the interior (110); and
- a control unit (101) according to one of the preceding claims, which is configured to process the image data in order to determine object information relative to an object (112) in the interior (110) of the household appliance (100) and/or in order to provide an evaluated image relative to the interior (110) of the household appliance (100).

10. Household appliance (100) according to claim 9, wherein
- the household appliance (100) is designed to cook a food in the interior (110); and
- the control unit (101) is designed to determine information relative to a cooking state of a food arranged in the interior (110) as object information.

11. Household appliance (100) according to one of claims 9 to 10, wherein
- a reference mark (200) comprises a machine-readable code, in particular a quick response code; and/or
- a reference mark (200) comprises a logo; and/or
- a reference mark (200) has a code which comprises information relative to the reference values of the one or more different properties of the reference mark (200); and/or
- a reference mark (200) comprises one or more different partial regions (201) with different reference values of the one or more properties.

12. Method (400) for processing image data relative to a household appliance (100),
wherein the household appliance (100) has a plurality of different reference marks (200) in an interior (110); wherein the reference marks (200) in each case have reference values of one or more properties; wherein at least one property of the reference marks (200) relates to a colour; wherein the different reference marks (200) are arranged at different positions in the interior (110) of the household appliance (100); wherein the method (400) comprises
- recording (401) image data relative to the interior (110) of the household appliance (100) by means of a camera (103);
- identifying (402) the plurality of different reference marks (200) in the image data;
- determining (403) actual values of the one or more properties of the individual reference marks (200) of the plurality of reference marks (200) on the basis of the image data;
- determining a plurality of local transformations for the corresponding plurality of positions on the basis of the actual values and on the basis of the reference values of the plurality of reference marks (200) at the corresponding plurality of positions;
- determining a transformation on the basis of the plurality of local transformations, by interpolation between the local transformations for the different positions;
- transforming an image represented by the image data relative to the interior (110) of the household appliance (100) by means of the transformation in order to determine a transformed image, wherein the image data is processed in order to normalize the image data at least partially in terms of colour; and
- determining, on the basis of the transformed image, object information relative to an object (112) in the interior (110) of the household appliance (100) and/or an evaluated image relative to the interior (110) of the household appliance (100).

## Revendications

1. Unité de commande (101) pour un appareil ménager (100) qui comporte une pluralité de différentes marques de référence (200) dans un espace intérieur (110) ; dans laquelle les marques de référence (200) présentent respectivement des valeurs de référence pour une ou plusieurs propriétés différentes ; dans laquelle au moins une propriété des marques de référence (200) se rapporte à une couleur ; dans laquelle les différentes marques de référence (200) sont disposées à différentes positions dans l'espace intérieur (110) de l'appareil ménager (100) ; dans laquelle l'unité de commande (101) est configurée pour
- enregistrer avec une caméra (103) des données d'image concernant l'espace intérieur (110) de l'appareil ménager (100) ;
- identifier la pluralité de marques de référence (200) différentes dans les données d'image ;
- déterminer sur la base des données d'image des valeurs de mesure pour les une ou plusieurs propriétés de chaque marque de référence (200) de la pluralité de marques de référence (200) ;
- déterminer sur la base des valeurs de mesure et sur la base des valeurs de référence pour la pluralité de marques de référence (200) à la pluralité correspondante de positions une pluralité de transformations locales pour la pluralité correspondante de positions ;
- déterminer une transformation sur la base de la pluralité de transformations locales par interpolation entre les transformations locales pour les différentes positions ;
- transformer une image représentée par les données d'image concernant l'espace intérieur (110) de l'appareil ménager (100) par une transformation pour déterminer une image transformée, les données d'image étant traitées pour les normaliser au moins partiellement en termes de couleur ; et
- déterminer des informations d'objet concernant un objet (112) dans l'espace intérieur (110) de l'appareil ménager (100) et/ou une image améliorée concernant l'espace intérieur (110) de l'appareil ménager (100) sur la base de l'image transformée.

2. Unité de commande (101) selon la revendication 1, l'unité de commande (101) étant conçue
- pour comparer les valeurs de mesure avec les valeurs de référence pour les une ou plusieurs propriétés des marques de référence (200) ; et
- pour traiter les données d'image en fonction de la comparaison.

3. Unité de commande (101) selon l'une des revendications précédentes, l'unité de commande (101) étant conçue pour déterminer la transformation de telle sorte qu'une valeur d'écartement entre les valeurs de mesure et les valeurs de référence pour une ou plusieurs propriétés d'au moins une marque de référence (200) pour l'image transformée soit inférieure à la valeur d'écartement pour l'image représentée par les données d'image.

4. Unité de commande (101) selon l'une des revendications précédentes, l'unité de commande (101) étant conçue pour
- déterminer les positions de la pluralité de marques de référence (200) dans l'espace intérieur (110) de l'appareil ménager (100) ; et
- déterminer la transformation pour la transformation de l'image représentée par les données d'image en fonction des positions de la pluralité de marques de référence (200).

5. Unité de commande (101) selon l'une des revendications précédentes, l'unité de commande (101) étant conçue pour
- déterminer sur la base d'au moins une des marques de référence (200) identifiées dans les données d'image, en particulier sur la base des valeurs de mesure pour l'une ou plusieurs propriétés d'au moins une marque de référence (200), et sur la base d'informations d'affectation, un type d'appareil ménager de l'appareil ménager (100) parmi une pluralité de types d'appareil ménager ; dans laquelle les informations d'affectation sont conçues pour affecter différentes combinaisons d'une ou plusieurs marques de référence (200) à différents types d'appareil ménager parmi la pluralité de types d'appareil ménager ; et
- traiter également les données d'image en fonction du type d'appareil ménager, en particulier déterminer la transformation pour la transformation de l'image représentée par les données d'image en fonction du type d'appareil ménager.

6. Unité de commande (101) selon la revendication 5, dans laquelle la pluralité de types d'appareil ménager comprend
- un ou plusieurs modèles de four ;
- un ou plusieurs modèles de réfrigérateur ou congélateur ;
- un ou plusieurs modèles de lave-vaisselle ;
- un ou plusieurs modèles de machine à laver ;
- un ou plusieurs modèles de robot de cuisine ; et/ou
- un ou plusieurs modèles de sèche-linge.

7. Unité de commande (101) selon l'une des revendications précédentes, dans laquelle les une ou plusieurs propriétés d'une marque de référence (200) comprennent
- une valeur de couleur et/ou une température de couleur d'au moins une zone partielle (201) de la marque de référence (200) ;
- une valeur de couleur et/ou une température de couleur d'une surface blanche de la marque de référence (200) ;
- un contraste entre au moins deux zones partielles (201) de la marque de référence (200) ;
- une luminosité d'au moins une zone partielle (201) de la marque de référence (200).

8. Unité de commande (101) selon l'une des revendications précédentes, dans laquelle
- les marques de référence (200) de la pluralité de marques de référence (200) présentent des valeurs de référence au moins partiellement différentes pour les une ou plusieurs propriétés ; et/ou
- les marques de référence (200) de la pluralité de marques de référence (200) sont alignées et/ou orientées au moins partiellement de façons différentes.

9. Appareil ménager (100) comprenant
- un espace intérieur (110) pour loger au moins un objet (112) qui est traité ou remanié dans l'appareil ménager (100) ;
- une pluralité de différentes marques de référence (200) disposées dans l'espace intérieur (110) ;
- au moins une caméra (112) conçue pour enregistrer des données d'image concernant l'espace intérieur (110) ;
- une unité de commande (101) selon l'une des revendications précédentes conçue pour traiter les données d'image pour déterminer des informations d'objet concernant un objet (112) dans l'espace intérieur (110) de l'appareil ménager (100) et/ou pour préparer une image améliorée concernant l'espace intérieur (110) de l'appareil ménager (100).

10. Appareil ménager (100) selon la revendication 9,
- l'appareil ménager (100) étant conçu pour cuire un aliment dans l'espace intérieur (110) ; et
- l'unité de commande (101) étant conçue pour déterminer en tant qu'informations d'objet des informations concernant un état de cuisson d'un aliment disposé dans l'espace intérieur (110).

11. Appareil ménager (100) selon l'une des revendications 9 à 10, dans lequel
- une marque de référence (200) comprend un code lisible par machine, en particulier un code QR ; et/ou
- une marque de référence (200) comprend un logo ; et/ou
- une marque de référence (200) comporte un code qui comprend des informations concernant les valeurs de référence pour les une ou plusieurs propriétés de la marque de référence (200) ; et/ou
- une marque de référence (200) comprend une ou plusieurs zones partielles différentes (201) avec différentes valeurs de référence pour les une ou plusieurs propriétés.

12. Procédé (400) de traitement de données d'image concernant un appareil ménager (100), dans lequel l'appareil ménager (100) présente une pluralité de différentes marques de référence (200) dans un espace intérieur (110) ; dans lequel les marques de référence (200) présentent respectivement des valeurs de référence pour une ou plusieurs propriétés différentes ; dans lequel au moins une propriété des marques de référence (200) se rapporte à une couleur ; dans lequel les différentes marques de référence (200) sont disposées à différentes positions dans l'espace intérieur (110) de l'appareil ménager (100) ; dans lequel le procédé (400) comprend
- enregistrer (401) des données d'image concernant l'espace intérieur (110) de l'appareil ménager (100) avec une caméra (103) ;
- identifier (402) la pluralité de marques de référence (200) différentes dans les données d'image ;
- déterminer (403) des valeurs de mesure pour les une ou plusieurs propriétés de chaque marque de référence (200) de la pluralité de marques de référence (200) sur la base des données d'image ;
- déterminer sur la base des valeurs de mesure et sur la base des valeurs de référence pour la pluralité de marques de référence (200) à la pluralité correspondante de positions une pluralité de transformations locales pour la pluralité correspondante de positions ;
- déterminer sur la base de la pluralité de transformations locales une transformation par interpolation entre les transformations locales pour les différentes positions ;
- transformer une image représentée par les données d'image concernant l'espace intérieur (110) de l'appareil ménager (100) par une transformation pour déterminer une image transformée, les données d'image étant traitées pour normaliser les données d'image au moins partiellement en termes de couleur ; et
- déterminer des informations d'objet concernant un objet (112) dans l'espace intérieur (110) de l'appareil ménager (100) et/ou une image améliorée concernant l'espace intérieur (110) de l'appareil ménager (100) sur la base de l'image transformée.
